# EUROPEAN PATENT APPLICATION

(11) **EP 3 823 263 A1**
(43) Date of publication of application: **19.05.2021**
(21) Application number: 19833839.4
(22) Date of filing: 28.03.2019
(51) Int. Cl.: H04N 1/191, G03B 27/54, G07D 7/121, H04N 1/028

(54) **OPTICAL LINE SENSOR UNIT**

(30) Priority: 11.07.2018 JP 2018131246
(71) Applicant: Vienex Corporation, Kanonji-shi, Kagawa 768-0021 (JP)
(72) Inventor: RYUMAN, Kazuaki, Kanonji-shi, Kagawa 768-0021 (JP); NORIKANE, Eiji, Kanonji-shi, Kagawa 768-0021 (JP)
(74) Representative: Mewburn Ellis LLP
(86) International application number: PCT/JP2019/013544
(87) International publication number: WO 2020/012729

(57) **Abstract**

A line light source 10 is used as an illumination light source illuminating paper sheet. A reference reflector plate 17 (reflecting member) is disposed on an optical path from the line light source 10 to a lens array, is provided in a light receiving region R of a light receiver, outside a reading region W for reading an image of the paper sheet in a main scanning direction y. A light passing region 18 that allows light from the line light source 10 to pass through and leads the light to an approximate focal point 21 of the lens array on a transport path is formed on at least on one side with respect to the reference reflector plate 17 in the sub-scanning directions y.

## Description

### TECHNICAL FIELD

The present invention relates to an optical line sensor unit that scans a paper sheet transported on a transport path along a sub-scanning direction along a main scanning direction orthogonal to the sub-scanning direction.

### BACKGROUND

A general image reader is provided with a visible light source irradiating paper sheets with visible light. In order to correct an amount of light from this visible light source, a reference reflector plate (reflecting member) having a high reflectance of visible light may be used (see, for example, Patent Documents 1 and 2).

An optical line sensor unit used for authenticity determination of banknotes, securities, and the like is provided with an ultraviolet light source and an infrared light source in addition to a visible light source in order to improve authenticity determination performance (see, for example, Patent Document 3). The conventional reference reflector plate, which has a low reflectance of ultraviolet light, cannot accurately correct a light amount of the ultraviolet light source when used for this type of optical line sensor unit. In addition, the conventional reference reflector plate does not have light resistance to ultraviolet light.

### PRIOR ART DOCUMENT

### PATENT DOCUMENT

Patent Document 1: JP 2007-81696 A
Patent Document 2: JP 2008-72584 A
Patent Document 3: JP 2016-5093 A

### SUMMARY OF THE INVENTION

### PROBLEMS TO BE SOLVED BY THE INVENTION

As a result of studies on a material and a structure of the reference reflector plate having high reflectance over an ultraviolet region, visible region, and near infrared region, the inventors of the present application have found a material and structure capable of increasing accuracy of light amount correction in each wavelength range. However, there has been still a problem that the amount of light received in the region (reading region) for reading the image of the paper sheets in a light receiver decreases at the end in the main scanning direction, and the amount of light in the entire reading region becomes non-uniform due to the decrease in the amount of light received.

In the optical line sensor unit, the reference reflector plate is disposed at a position that does not interfering reading of the paper sheets in a light receiving region (in a readable region) of the light receiver. Specifically, the reference reflector plate is disposed within the light receiving region of the light receiver, outside the reading region (effective reading region) in the main scanning direction. The inventors of the present application consider that the presence of this reference reflector plate affects the decrease in the amount of light received at the end of the reading region of the light receiver in the main scanning direction, and as a result of further studies, have found that a decrease in the amount of light received can be prevented by appropriately changing the shape of the reference reflector plate.

The present invention has been made in view of the above circumstances, and an object of the present invention is to provide an optical line sensor unit capable of preventing an amount of light received in a reading region of a light receiver from decreasing at an end in a main scanning direction.

### MEANS FOR SOLVING THE PROBLEMS

(1) An optical line sensor unit of the present invention is an optical line sensor unit configured to scan a paper sheet transported on a transport path along a sub-scanning direction along a main scanning direction orthogonal to the sub-scanning direction, the optical line sensor unit including a line light source, a lens array, a light receiver, and a reflecting member. The line light source is used as an illumination light source illuminating the paper sheet. The lens array guides light from the illuminated paper sheet. The light receiver has a plurality of light-receiving elements aligned along the main scanning direction, and the plurality of light-receiving elements receives light that has passed through the lens array. The reflecting member is disposed on an optical path from the line light source to the lens array, provided in a light receiving region of the light receiver outside a reading region for reading an image of the paper sheet in the main scanning direction, and configured to reflect a part of light from the line light source and guide the light to the lens array. The reflecting member has a light passing region disposed on at least one side of the sub-scanning direction, configured to allow the light from the line light source to pass through, and configured to lead the light to an approximate focal point of the lens array on the transport path.
   In this configuration, the light from the line light source can be guided to the approximate focal point of the lens array on the transport path through the light passing region formed on at least one side with respect to the reflecting member in the sub-scanning direction. This prevents the light directed from the line light source toward the focal point from being blocked by the reflecting member at the end of the reading region of the light receiver in the main scanning direction. It is therefore possible to prevent the amount of light received in the reading region of the light receiver from decreasing at the end in the main scanning direction.
(2) The plurality of light-receiving elements near an end of the reading region preferably has a light receiving intensity substantially identical in a case where the reflecting member exists and in a case where the reflecting member does not exist.
   In this configuration, when the reflecting member is disposed, the light receiving intensity by the light-receiving elements near the end of the reading region does not decrease. It is therefore possible to prevent the amount of light received in the reading region of the light receiver from decreasing at the end in the main scanning direction.
(3) When a total light receiving intensity of the plurality of light-receiving elements provided in a region outside a boundary position in the main scanning direction is Sₚ in a case where the reflecting member exists and Sₙ in a case where the reflecting member does not exist, Sₚ/Sₙ > 2, preferably.
   In this configuration, reflected light from the reflecting member can be received by the light receiver with sufficient intensity in the region outside the boundary position in the main scanning direction.
(4) The light passing region may have a width that is substantially uniform along the main scanning direction or is larger toward the reading region along the main scanning direction.
   In this configuration, the light from the line light source can be favorably guided to the approximate focal point of the lens array on the transport path through the light passing region. In particular, when the light passing region widens toward the reading region along the main scanning direction, the reflected light from the reflecting member is received by the light receiver with sufficient intensity. In addition, the amount of light received in the reading region of the light receiver can be prevented from decreasing at the end in the main scanning direction.
(5) The reflecting member may have an end close to the reading region in the sub-scanning direction, the end being located close to the lens array with respect to a straight line connecting a focal point of the lens array at a position facing the end and an end point close to the lens array of an emission surface of the line light source at a position facing the end.
   In this configuration, the end of the reflecting member close to reading region in the sub-scanning direction does not block the light directed from the line light source toward the focal point. This can effectively prevent a reduction in the amount of light received in the reading region of the light receiver at the end in the main scanning direction.
(6) The two line light sources may be provided on both sides with respect to the lens array in the sub-scanning direction. In this case, the light passing regions are preferably disposed on both sides of the lens array in the sub-scanning direction.
   This configuration can prevent the light directed from each line light source toward the focal point from being blocked by the reflecting member in a configuration in which two line light sources are provided on both sides with respect to the lens array in the sub-scanning direction (bilateral irradiation).
(7) The line light source may be provided alone on one side with respect to the lens array in the sub-scanning direction. In this case, the light passing region is preferably disposed on one side of the lens array in the sub-scanning direction.
   This configuration can prevent the light directed from the line light source toward the focal point from being blocked by the reflecting member in a configuration in which the line light source is provided alone on one side with respect to the lens array in the sub-scanning direction (unilateral irradiation).
(8) The reflecting member may have a multilayer structure including at least two layers. In this case, a layer of the reflecting member close to the line light source is preferably configured to reflect ultraviolet light, and a layer of the reflecting member close to the transport path is preferably configured to reflect visible light and infrared light.
   This configuration allows ultraviolet light to be reflected by the layer of the reflecting member close to the line light source and received by the light receiver, and allows visible light and infrared light to be reflected by the layer of the reflecting member close to the transport path and received by the light receiver. As a result, ultraviolet light, visible light, and infrared light can be reflected by the reflecting member, and thus the amount of light can be corrected over a wide wavelength range.
(9) The reflecting member preferably includes a material including at least one of metal oxide, silicon dioxide, or fluororesin.
   In this configuration, light in a wide wavelength range can be favorably reflected by the reflecting member, and thus the amount of light can be corrected over a wide wavelength range.
(10) A thickness of the reflecting member is preferably 0.3 mm or less.

This configuration increases a distance between the lens array and the reflecting member, increases the light emitted from the line light source, reaching the reflecting member, and reflected by the reflecting member, and thus increases the amount of light received by the light receiver.

### EFFECTS OF THE INVENTION

The present invention can prevent the light directed from the line light source toward the focal point from being blocked by the reflecting member, and prevent the amount of light received in the reading region of the light receiver from decreasing at the end in the main scanning direction.

### BRIEF DESCRIPTION OF THE DRAWINGS

Fig. 1 is a schematic sectional view showing a configuration example of an optical line sensor unit according to one embodiment of the present invention.
Fig. 2 is a perspective view schematically showing appearance of a line light source in the optical line sensor unit shown in Fig. 1.
Fig. 3 is a side view of the line light source.
Fig. 4 is a perspective view of the optical line sensor unit which indicates an attachment position of a reference reflector plate.
Fig. 5 is a partial plan view of the optical line sensor unit which indicates the attachment position of the reference reflector plate.
Fig. 6A is a partial plan view of the optical line sensor unit which shows a first modification of a shape of the reference reflector plate in Fig. 5.
Fig. 6B is a partial plan view of the optical line sensor unit which shows a second modification of the shape of the reference reflector plate in Fig. 5.
Fig. 7 is a graph showing one example of an amount of light received in each light-receiving element of a light receiver.
Fig. 8 is sectional view showing one example of a specific structure of the reference reflector plate.
Fig. 9 is a schematic sectional view showing a configuration example of an optical line sensor unit according to another embodiment of the present invention.
Fig. 10 is a partial plan view of the optical line sensor unit which indicates the attachment position of the reference reflector plate in the optical line sensor unit.
Fig. 11 is a partial plan view of the optical line sensor unit which shows a modification of the shape of the reference reflector plate in Fig. 10.

### DETAILED DESCRIPTION OF THE PREFERRED EMBODIMENTS

### <Optical line sensor unit>

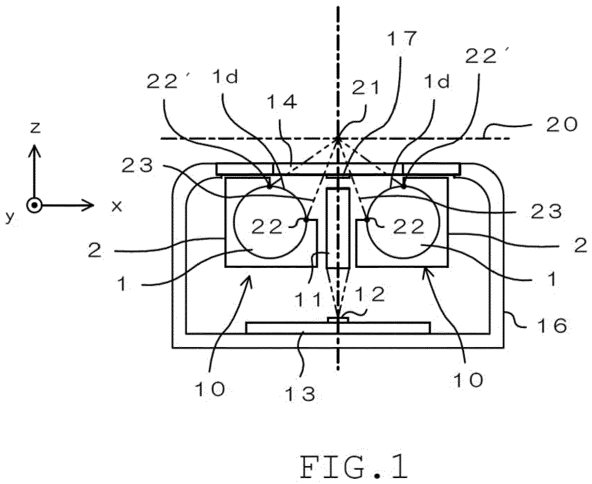

Fig. 1 is a schematic sectional view showing a configuration example of an optical line sensor unit according to one embodiment of the present invention.

This optical line sensor unit includes a housing 16, two line light sources 10 illuminating a paper sheet, a lens array 11 guiding light from the paper sheet on a transport path 20 irradiated with light from the line light sources 10, and a light receiver 12 placed on a board 13 and receiving transmitted light guided by the lens array 11. The paper sheet is transported in one direction x (sub-scanning direction) along the transport path 20.

The housing 16, the line light source 10, the light receiver 12, and the lens array 11 extend in a y direction (main scanning direction), that is, in a direction perpendicular to a paper surface in Fig. 1, and Fig. 1 is a sectional view thereof.

The two line light sources 10 are illumination light sources that illuminate the paper sheet by emitting light toward the paper sheet on the transport path 20. The light emitted from the line light sources 10 is guided to near a common focal point 21 on the transport path 20 and illuminates the paper sheet. Types of the emitted light are visible light and ultraviolet light, and infrared light may also be emitted.

The ultraviolet light has a peak wavelength of 300 nm to 400 nm, and the infrared light has a peak wavelength of up to 1,500 nm.

Of these lights, at least the ultraviolet light is emitted so as not to overlap other lights temporally (that is, while being switched temporally). The infrared light may be emitted by overlapping the visible light temporally, or may be emitted so as not to overlap the visible light temporally.

The light emitted from the line light sources 10 passes through a protective glass 14 and is guided to near the focal point 21 on the transport path 20 to illuminate the paper sheet. The protective glass 14 is not necessary and can be omitted, but is desirably provided to protect the line light sources 10 and the lens array 11 from scattering and scratches of dust during use (dust such as paper dust generated when the paper sheet is transported).

A material of the protective glass 14 may be any material that transmits light emitted from the line light sources 10, and may be a transparent resin such as an acrylic resin or a cycloolefin resin. However, in the embodiment of the present invention, it is preferable to use glass such as white glass plate or borosilicate glass that transmits ultraviolet light particularly.

The lens array 11 is an optical element that guides light (reflected light, fluorescence, or the like) from the illuminated paper sheet to the light receiver 12 to form an image, and a rod lens array such as a SELFOC lens array (registered trademark: manufactured by Nippon Sheet Glass Company, Ltd.) can be used. In the embodiment of the present invention, a magnification of the lens array 11 is set to the same magnification. The lens array 11 is provided between the two line light sources 10. The light from the paper sheet based on the light emitted from the line light sources 10 passes coaxially with the common lens array 11 and is focused on the light receiver 12.

An ultraviolet light blocking filter (not shown) that blocks ultraviolet light by reflecting or absorbing the ultraviolet light is preferably provided at an arbitrary position from the transport path 20 to the light receiver 12 such that the ultraviolet light does not enter the light receiver 12. For example, the ultraviolet light blocking filter may be attached to a surface of the lens array 11 to have a function of blocking ultraviolet light. As used herein, the term "blocking light" means reflecting or absorbing but not transmitting light.

The light receiver 12 includes a plurality of light-receiving elements that receives light from the paper sheet and reads an image as an electric output by photoelectric conversion. The plurality of light-receiving elements is aligned along the main scanning direction. By receiving the light from the paper sheet that has passed through the lens array 11 by the light-receiving elements, the paper sheet transported along the sub-scanning direction can be scanned along the main scanning direction. A material and a structure of the light-receiving elements are not specified, and a photodiode or phototransistor using amorphous silicon, crystalline silicon, CdS, CdSe, or the like may be disposed. The light-receiving elements may be a charge coupled device (CCD) linear image sensor. Further, useable as the light receiver 12 is a so-called multi-chip linear image sensor in which a plurality of integrated circuits (ICs) integrating a photodiode, a phototransistor, a drive circuit, and an amplifier circuit is aligned.

### <Line light source>

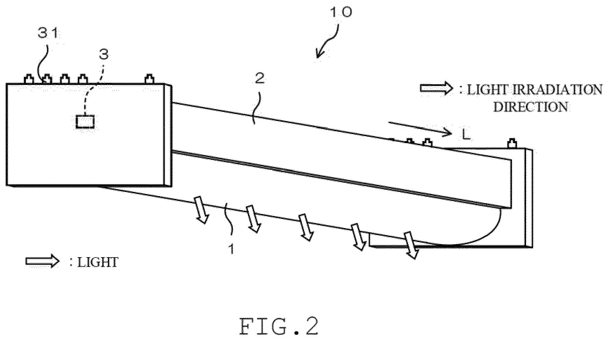

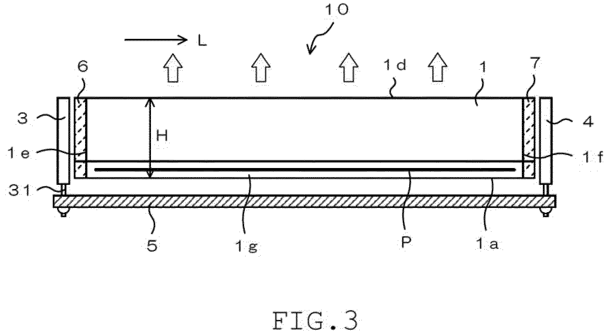

Fig. 2 is a perspective view schematically showing appearance of the line light source 10 in the optical line sensor unit shown in Fig. 1. Fig. 3 is a side view of the line light source 10. In Fig. 2, the line light source 10 is shown upside down. Further, in Fig. 3, a cover member 2 is not shown.

The line light source 10 has a transparent light guide 1 extending along a longitudinal direction L (main scanning direction y), a light source unit 3 provided near one end surface in the longitudinal direction L, a light source unit 4 provided near the other end surface in the longitudinal direction L, and the cover member 2 holding side surfaces of the light guide 1. A light diffusion pattern forming surface 1g is diagonally formed between a bottom surface and left and right side surfaces of the light guide 1. The light incident on end surfaces 1e and 1f of the light guide 1 respectively from the light source unit 3 and the light source unit 4 and traveling through the light guide 1 is diffused and refracted by the light diffusion pattern P formed on the light diffusion pattern forming surface 1g, and is emitted from a light emitting side surface 1d of the light guide 1. Further, optical filters 6 and 7 are preferably provided on the end surfaces 1e and 1f of the light guide 1, respectively.

The light guide 1 may include a highly light-transmissive resin such as acrylic resin or optical glass. However, a fluororesin or a cycloolefin resin having relatively little attenuation to light is preferable as the material of the light guide 1 because ultraviolet light is used in the embodiment of the present invention.

The light guide 1 has an elongated columnar shape, and a section orthogonal to the longitudinal direction L of the light guide 1 has substantially the same shape and the same dimensions at any cut end in the longitudinal direction L. Further, a proportion of the light guide 1, that is, a ratio of a length of the light guide 1 in the longitudinal direction L to a height H of the section orthogonal to the longitudinal direction L is larger than 10, preferably larger than 30. For example, if the length of the light guide 1 is 200 mm, the height H of the section orthogonal to the longitudinal direction L is about 5 mm.

The light emitting side surface 1d of the light guide 1 (corresponding to a lower surface of the light guide 1 in Fig. 2 and an upper surface of the light guide 1 in Fig. 3) is shaped in an outward smooth convex curve in order to have an optical focusing effect of a lens. However, the light emitting side surface 1d does not have to be formed in a convex shape, and may have a planar shape. In this case, the lens focusing the light emitted from the light guide 1 is preferably disposed so as to face the light emitting side surface 1d.

The light diffusion pattern P on the light diffusion pattern forming surface 1g maintains a constant width and extends in a straight line along the longitudinal direction L of the light guide 1. A dimension of the light diffusion pattern P along the longitudinal direction L is longer than a reading length of an image sensor (that is, a width of the reading region of the light receiver 12).

The light diffusion pattern P includes a plurality of V-shaped grooves engraved on the light diffusion pattern forming surface 1g of the light guide 1. The plurality of V-shaped grooves extends in the direction orthogonal to the longitudinal direction L of the light guide 1, and has the same length. The plurality of V-shaped grooves may have, for example, an isosceles triangle in cross section.

This light diffusion pattern P allows the light incident from the end surfaces 1e and 1f of the light guide 1 and propagating inside the light guide 1 in the longitudinal direction L to be refracted and diffused, and to emit from the light emitting side surface 1d with substantially uniform brightness along the longitudinal direction L. As a result, the light emitted to the paper sheet can be substantially constant in the entire longitudinal direction L of the light guide 1, and uneven illuminance can be eliminated.

The V-shape of the grooves of the light diffusion pattern P is an example, and can be arbitrarily changed to a U-shape instead of the V-shape as long as uneven illuminance is not noticeable. A width of the light diffusion pattern P does not have to be maintained constant, and the width may change along the longitudinal direction L of the light guide 1. A depth of the grooves and an opening width of the grooves can also be changed as appropriate.

The cover member 2 has an elongated shape along the longitudinal direction L of the light guide 1, and can cover the side surface of the light guide 1 other than the light emitting side surface 1d. The cover member 2 has a recess having a substantially U-shaped cross section, and the light guide 1 can be inserted into the recess.

The cover member is formed using a material that is opaque and has high reflectance (for example, a white material). For example, the cover member 2 may be a white resin molded product having high reflectance or a resin molded product coated with the white resin in order to reflect the light leaking from the side surface other than the light emitting side surface 1d of the light guide 1 again into the light guide 1. Alternatively, the cover member 2 may include a metal body such as stainless steel or aluminum.

The light source unit 3 is a light source that emits visible light or light having a wavelength ranging from visible to infrared, and for example, a plurality of light emitting diodes (LEDs) that emits light having wavelengths of near infrared, red, green, and blue is used. Further, when white light mixed with red, green, and blue is emitted, the three colors of red, green, and blue may be turned on at the same time, or a fluorescent agent is mixed in a sealing agent of the LED light source, and white light from fluorescence may be emitted.

The other light source unit 4 is a light source that emits ultraviolet light to the light guide 1, and an ultraviolet light LED light source of 300 nm to 400 nm or the like can be used. An ultraviolet light emitting diode having a peak emission wavelength in a range of 330 nm to 380 nm is preferably used.

Terminals 31 to be placed on a board 5 are formed in the light source units 3 and 4. These terminals 31 are inserted into the board 5 and joined together by soldering or the like to be electrically connected to a driving power source (not shown). The driving power source has a circuit configuration in which the light source units 3 and 4 can emit light simultaneously or temporally alternately by selecting between an electrode terminal that applies a voltage to the light source unit 3 and an electrode terminal that applies a voltage to the light source unit 4. The light can be emitted simultaneously or temporally alternately by selecting any LED from the plurality of LEDs built in the light source unit 3.

With the above configuration, the light in a wavelength range of visible light or in a wavelength range from visible light to infrared light can be incident on the light guide 1 from the end surface 1e provided with the light source unit 3, and the ultraviolet light can be incident on the light guide 1 from an end surface If provided with the light source unit 4 in a compact configuration. As a result, the light emitted from the light source unit 3 or the light emitted from the light source unit 4 can be emitted from the light emitting side surface 1d of the light guide 1.

The end surface 1e provided with the light source unit 3 of the light guide 1 is preferably provided with a filter 6 that transmits infrared light and visible light of 420 nm or more and blocks ultraviolet light of less than 400 nm by reflecting or absorbing. Further, the end surface If provided with the light source unit 4 of the light guide 1 is provided with a filter 7 that transmits ultraviolet light of less than 400 nm and blocks infrared light and visible light of 420 nm or more by reflecting or absorbing.

The filters 6 and 7 are not limited and may include any material or structure that blocks the target wavelength range. For example, filters that reflect light are preferably interference filters (bandpass filters) obtained by multi-layer deposition of thin films of metal oxides or dielectrics having different transmittances and refractive indexes on glass surfaces.

For example, the interference filter that reflects light can be obtained by adopting silicon oxide, tantalum pentoxide, and the like, adjusting the transmittance, refractive index, and film thickness of each, and performing multi-layer deposition, and securing the desired bandpass filter characteristics. As a matter of course, there is no limitation in adoption as long as the interference filters are bandpass filters conventionally manufactured for ordinary optical-related industries and satisfying the required performance.

When the interference filters are used as the filters 6 and 7 and a target transmission range cannot be adjusted only by the interference filters, desired wavelength characteristics can be secured by stacking thin films of metal or metal oxide, nitride, or fluoride on the interference filters.

When the filter 6 is a filter that absorbs ultraviolet light, the filter 6 may be an ultraviolet light absorbing film in which an organic ultraviolet light absorber is mixed in or coated on a transparent film. Further, in the interference filter, the desired wavelength characteristics can be secured by adopting, for example, silicon oxide, titanium oxide, and the like, and adjusting the transmittance, refractive index, and film thickness of each, and performing multi-layer deposition, and blocking the ultraviolet light by both functions of reflecting and absorbing.

Further, when the filter 7 is a filter that absorbs visible light and infrared light, a substance that allows ultraviolet light to pass through and cuts visible light and infrared light may be added to the film.

A method of installing the filters 6 and 7 on the light guide 1 is arbitrary, and the filters 6 and 7 may coat or cover by vapor deposition on the end surfaces 1e and 1f of the light guide 1. Further, film-shaped or plate-shaped filters 6 and 7 may be prepared and installed on the light guide 1 while closely attached to the end surfaces 1e and 1f of the light guide 1 or leaving at a certain distance from the end surfaces 1e and 1f.

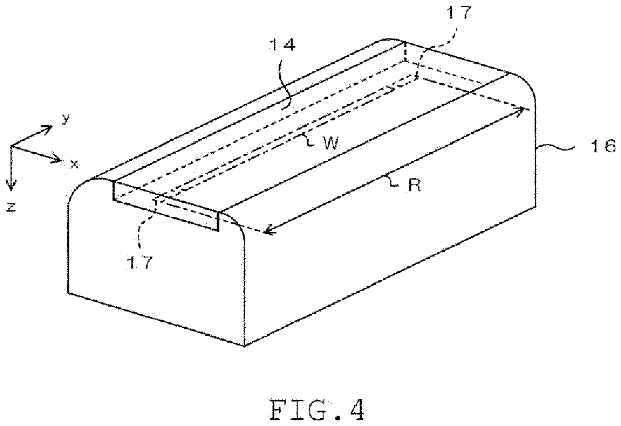

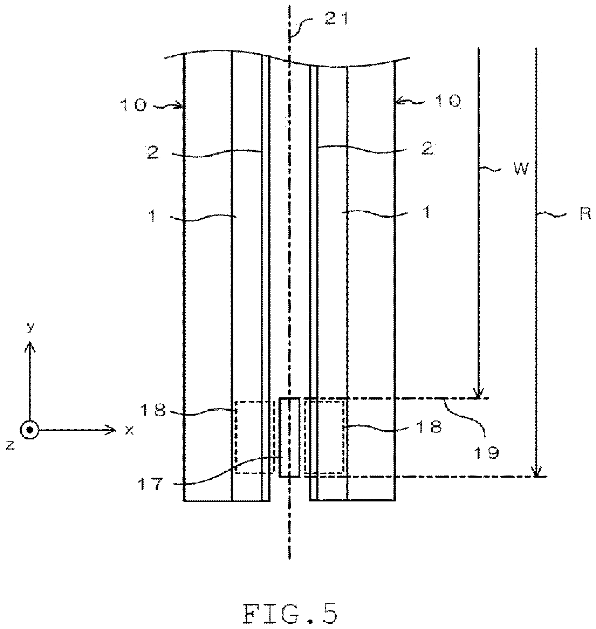

<Reference reflector plate> A reference reflector plate 17 functions as a reflecting member that reflects the light emitted from the line light sources 10. Fig. 4 is a perspective view of the optical line sensor unit which indicates an attachment position of the reference reflector plate 17. Fig. 5 is a partial plan view of the optical line sensor unit which indicates the attachment position of the reference reflector plate 17. In Fig. 5, the housing 16 is omitted. Hereinafter, a shape and the attachment position of the reference reflector plate 17 will be specifically described with reference to Figs. 1, 4, and 5.

A linear reading region along the main scanning direction y for reading the image of paper sheet is indicated by "W" in Fig. 4. The paper sheet is transported within the reading region W. The reference reflector plate 17 is provided within a light receiving region R (referring to a linear region along the main scanning direction y in which the light-receiving elements can read light) of the light receiver 12, outside the reading region W. For example, the reference reflector plate 17 is provided at a position immediately above both ends of the lens array 11 outside the reading region W. The lens array 11 is an upright lens having a magnification of one as described above, both ends of the lens array 11 optically correspond to both ends of the light receiving region R of the light receiver 12.

At both ends of the light receiving region R, part of the light emitted from the line light sources 10 hits the reference reflector plate 17 and is reflected. The reflected light from the reference reflector plate 17 passes through the lens array 11 and is received by the light receiver 12. In this way, the reference reflector plate 17 is disposed on an optical path from the line light sources 10 to the lens array 11. By receiving the reflected light from the reference reflector plate 17 by the light receiver 12, the image of the paper sheet can be corrected on the basis of data of the amount of light received. For example, a ratio of the amount of light received reflected from the reference reflector plate 17 to a predetermined reference value is calculated, and the amount of light can be corrected by a calculation using the above ratio with respect to the amount of light when the light from the paper sheet (reflected light, fluorescence, or the like) is received by the light receiver 12.

The position where the reference reflector plate 17 is installed is not limited, but as shown in Fig. 1, the reference reflector plate 17 is preferably disposed on an inner surface of the protective glass 14. The reference reflector plate 17 can be disposed on an outer surface of the protective glass 14. In this case, however, the reference reflector plate 17 may contact the paper sheet being transported, and measures are to be taken, such as embedding the reference reflector plate 17 in a surface of the protective glass.

In the present embodiment, a width of the reference reflector plate 17 in a sub-scanning direction x is narrower than in the conventional configuration. As a result, as shown in Fig. 5, light passing regions 18 for light from the line light sources 10 are formed on both sides with respect to the reference reflector plate 17 in the sub-scanning direction x. That is, on both sides of the sub-scanning direction x with respect to the reference reflector plate 17, the light directed from the line light sources 10 toward the transport path 20 is not completely blocked, and the light can pass through the transport path 20 through the light passing regions 18.

The light from the line light sources 10 that has passed through the light passing regions 18 is guided to a position of an approximate focal point 21 of the lens array 11 on the transport path 20. The approximate focal point 21 is a concept that includes not only the focal point 21 but also a region near the focal point 21. In the present embodiment, the lens array 11 extends in the main scanning direction y, and thus the position of the focal point 21 of the lens array 11 is formed on a straight line along the main scanning direction y. The reference reflector plate 17 is disposed between the lens array 11 and the focal point 21, and the light passing regions 18 are formed symmetrically on both sides with respect to the reference reflector plate 17 in the sub-scanning direction x.

As described above, in the present embodiment, two line light sources 10 are provided on both sides with respect to the lens array 11 in the sub-scanning direction x, and the light passing regions 18 are formed on both sides with respect to the lens array 11 in the sub-scanning direction x. The light from one of the line light sources 10 passes through one of the light passing regions 18 and is guided to the approximate focal point 21. The light from the other line light source 10 passes through the other light passing region 18 and is guided to the approximate focal point 21. This prevents the light directed from the line light sources 10 toward the focal point 21 from being blocked by the reference reflector plate 17 at an end of the light receiving region R of the light receiver 12 in the main scanning direction y. It is therefore possible to prevent the amount of light received in the reading region W of the light receiver 12 from decreasing at the end in the main scanning direction y.

A method of attaching the reference reflector plate 17 to the surface of the protective glass is not limited, but for example, a tape-like material may be attached, printing may be performed on the surface of the protective glass, or a paste-like material may be applied. The shape of the reference reflector plate 17 is also not limited. In this example, the reference reflector plate 17 is formed in a long rectangular shape along the main scanning direction y. The width of the reference reflector plate 17 in the sub-scanning direction x is, for example, the same as a width of the lens array 11 in the sub-scanning direction x, but may be smaller or larger than the width of the lens array 11 in the sub-scanning direction x. Further, the shape of the reference reflector plate 17 may be any other shape.

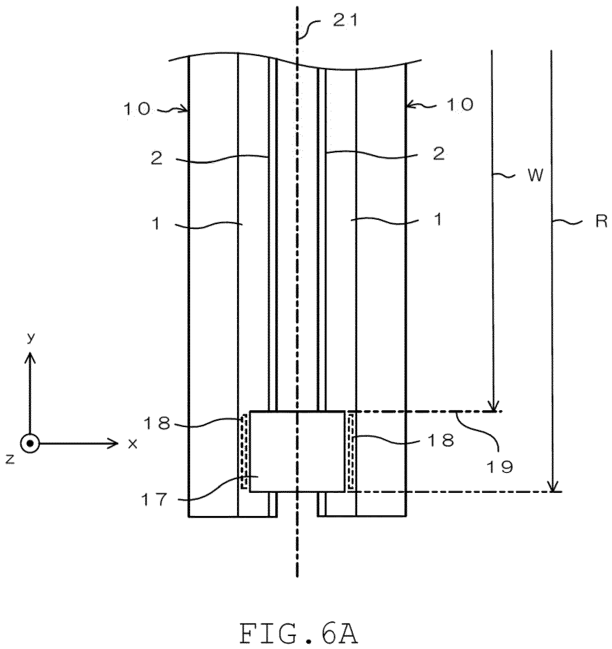

Fig. 6A is a partial plan view of the optical line sensor unit which shows the first modification of the shape of the reference reflector plate 17 in Fig. 5. In this example, the shape of the reference reflector plate 17 is rectangular as in the example in Fig. 5, but the width of the reference reflector plate 17 in the sub-scanning direction x is wider than that of the example in Fig. 5. That is, the width of each light passing region 18 in the sub-scanning direction x is narrower than that in the example in Fig. 5. Even with such a shape, it is sufficient that the light passing regions 18 allowing light from the line light sources 10 to pass through and guide to the approximate focal point 21 are formed on both sides of the sub-scanning direction x with respect to the reference reflector plate 17.

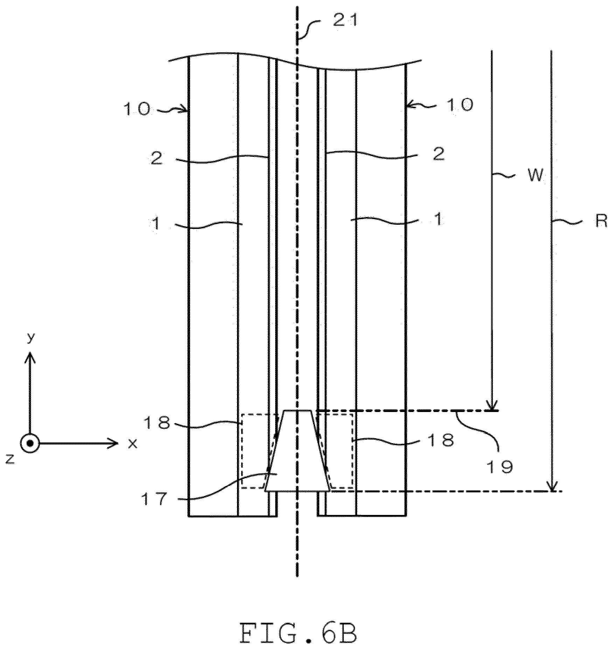

Fig. 6B is a partial plan view of the optical line sensor unit which shows a second modification of the shape of the reference reflector plate 17 in Fig. 5. In this example, the shape of the reference reflector plate 17 is formed in a trapezoidal shape. In the examples of Figs. 5 and 6A, the light passing regions 18 have a substantially uniform width along the main scanning direction y. However, in the example of Fig. 6B, the light passing regions 18 widen toward the reading region W along the main scanning direction y.

When the light passing regions 18 widen toward the reading region W along the main scanning direction y as in the example in Fig. 6B, the reflected light from the reference reflector plate 17 is received by the light receiver 12 with sufficient intensity. In addition, the amount of light received in the reading region W of the light receiver 12 can be prevented from decreasing at the end in the main scanning direction y. That is, in the reference reflector plate 17 close to the reading region W, the width of the light passing region 18 in the sub-scanning direction x is relatively wide, and the light directed from the line light sources 10 toward the focal point 21 is not easily blocked by the reference reflector plate 17. This prevents a reduction in the amount of light received in the reading region W of the light receiver 12. On the other hand, in the reference reflector plate 17 opposite to the reading region W, the width of the light passing region 18 in the sub-scanning direction x is relatively narrow, and the reflected light from the reference reflector plate 17 increases. Thus, the reflected light from the reference reflector plate 17 can be received by the light receiver 12 with sufficient intensity.

A configuration in which the light passing region 18 widens toward the reading region W along the main scanning direction y is not limited to a configuration in which the reference reflector plate 17 is formed in a trapezoidal shape as shown in Fig. 6B. Other examples of the shapes of the reference reflector plate 17 include a triangular shape that tapers toward the reading region W, and any other shape such as a shape having a stepped surface or an inclined surface close to the reading region W.

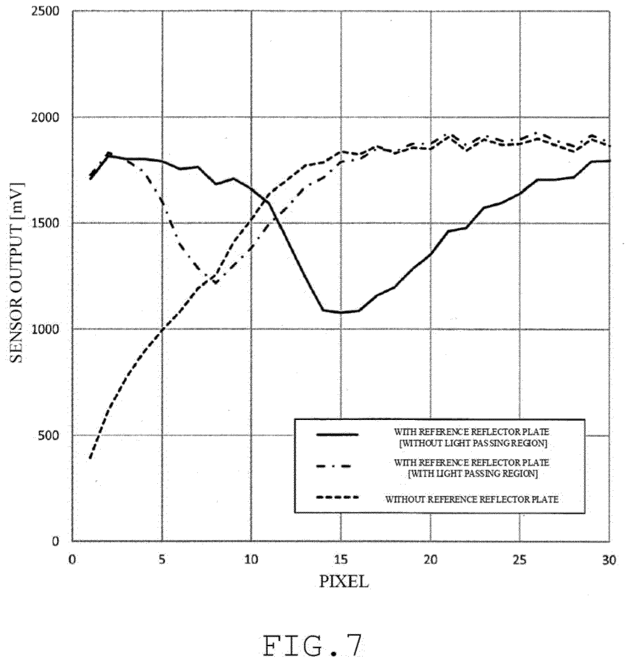

Fig. 7 is a graph showing one example of the amount of light received in each light-receiving element of the light receiver 12. Fig. 7 shows measured values (sensor output values) of the amount of light received in the light-receiving elements (pixels) of the light receiver 12 while the paper sheet (reference white medium) is transported on the transport path 20. In Fig. 7, the solid line represents a case where the reference reflector plate 17 is not provided, the dashed line represents a case where the reference reflector plate 17 with the light passing regions 18 (as in the present invention) is provided, and the broken line represents a case where the reference reflector plate 17 without the light passing regions 18 (as in the conventional configuration) is provided.

In this example, the reference reflector plate 17 is provided at a position facing the light-receiving elements of the first to tenth pixels of the light receiver 12, and the reading region W is the eleventh pixel or a subsequent pixel.

As shown in Fig. 7, light receiving intensity of the light-receiving elements of the 11th to 15th pixels at the end of the reading region W is greatly decreased in the conventional configuration with the reference reflector plate 17 (dotted line) as compared with the configuration without the reference reflector plate 17 (solid line). On the other hand, the light receiving intensity in the case where the reference reflector plate 17 of the present invention (dashed line) exists is substantially the same as the light receiving intensity in the case where the reference reflector plate 17 does not exist (solid line). That is, when the reference reflector plate 17 is disposed, the light receiving intensity by the light-receiving elements at the end of the reading region W does not decrease. It is therefore possible to prevent a reduction in the amount of light received in the reading region W of the light receiver 12 at the end in the main scanning direction y.

When a total light receiving intensity of the plurality of light-receiving elements (light-receiving elements up to the tenth pixel) provided in the region outside the boundary position 19 in the main scanning direction y is Sₚ in a case where the reference reflector plate 17 of the present invention exists (dashed line), and Sₙ in the case where the reference reflector plate 17 does not exist (solid line), Sₚ/Sₙ > 2, preferably. In this case, the reflected light from the reference reflector plate 17 can be received by the light receiver 12 with sufficient intensity in the region outside the boundary position 19 in the main scanning direction y.

As shown in Fig. 1, the end of the reference reflector plate 17 close to the reading region W in the sub-scanning direction x (an end of the boundary position 19 in the sub-scanning direction x) is located close to the lens array 11 with respect to the straight line 23 connecting the focal point 21 of the lens array 11 at a position facing the end and an end point 22 close to the lens array 11 of the light emitting side surface 1d (emission surface) of the line light source 10 at a position facing the end. The end point 22 is located at a boundary close to the lens array 11 between the light emitting side surface 1d of the lens array 11 and the cover member 2, and no light is emitted from the light guide 1 close to the lens array 11 with respect to the end point 22.

That is, at the end of the reference reflector plate 17 close to the reading region W in the sub-scanning direction x, all the light directed from the light emitting side surface 1d of the line light source 10 at the position facing the end facing the focal point 21 reaches the focal point 21 without being blocked by the end. In this way, the end of the reference reflector plate 17 close to reading region W does not block the light directed from the line light sources 10 toward the focal point 21. This can effectively prevent a reduction in the amount of light received in the reading region W of the light receiver 12 at the end in the main scanning direction y. An end point 22' is located at the boundary opposite to the lens array 11 between the light emitting side surface 1d of the lens array 11 and the cover member 2. All the light directed from the light emitting side surface 1d between the two end points 22 and 22' of the line light source 10 toward the focal point 21 reaches the focal point 21 without being blocked.

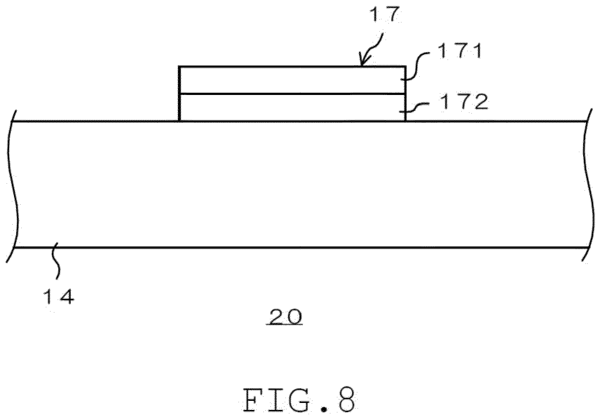

Fig. 8 is a sectional view showing one example of a specific structure of the reference reflector plate 17. The reference reflector plate 17 may have one layer, or may have a multilayer structure including a plurality of layers (for example, two layers) as shown in Fig. 8. In the example of Fig. 8, a first layer 171 of the reference reflector plate 17 close to the line light source 10 (close to the light guide 1) includes barium sulfate or zirconium oxide, and a second layer 172 of the reference reflector plate 17 close to the transport path 20 (close to the protective glass 14) includes titanium oxide.

The first layer 171 of the reference reflector plate 17 may include other materials that reflect ultraviolet light, not limited to barium sulfate or zirconium oxide. Further, the second layer 172 of the reference reflector plate 17 may include other materials that reflect visible light and infrared light, not limited to titanium oxide. The reference reflector plate 17 preferably includes a material including at least one of metal oxide, silicon dioxide, or fluororesin. Examples of the metal oxide include, but are not limited to, barium sulfate, zirconium oxide, and aluminum oxide. Examples of the fluororesin include, but are not limited to, polytetrafluoroethylene (PTFE). The reference reflector plate 17 may be formed, for example, by sequentially laminating ink including the above material on the protective glass 14 by silk printing. However, for example, a tape-like fluororesin may be adhered to the protective glass 14 because printing is impossible on fluororesin.

In the present embodiment, ultraviolet light can be reflected by the first layer 171 of the reference reflector plate 17 and received by the light receiver 12, and visible light and infrared light can be reflected by the second layer 172 of the reference reflector plate 17 and received by the light receiver 12. As a result, ultraviolet light, visible light, and infrared light can be reflected by the reference reflector plate 17, and thus the amount of light can be corrected over a wide wavelength range. However, the reference reflector plate 17 may include three or more layers. In this case, a layer close to the lens array 11 (opposite to the transport path 20) preferably includes a material that reflects ultraviolet light.

A thickness of the reference reflector plate 17 is preferably 0.3 mm or less. This increases the distance between the lens array 11 and the reference reflector plate 17, increases the light emitted from the line light source 10, reaching the reference reflector plate 17, and reflected by the reference reflector plate 17, and thus increases the amount of light received by the light receiver 12.

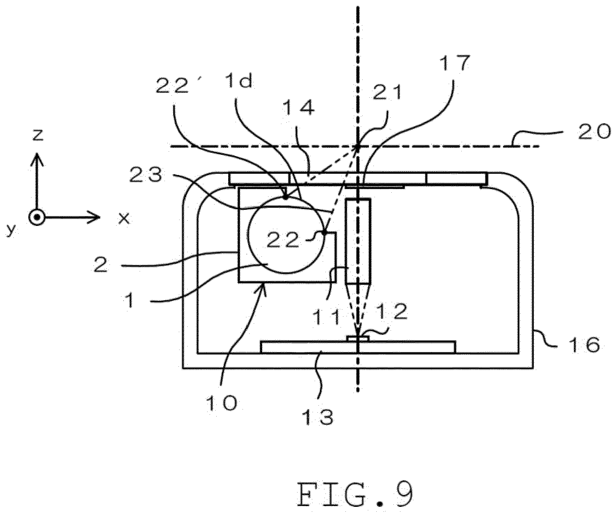

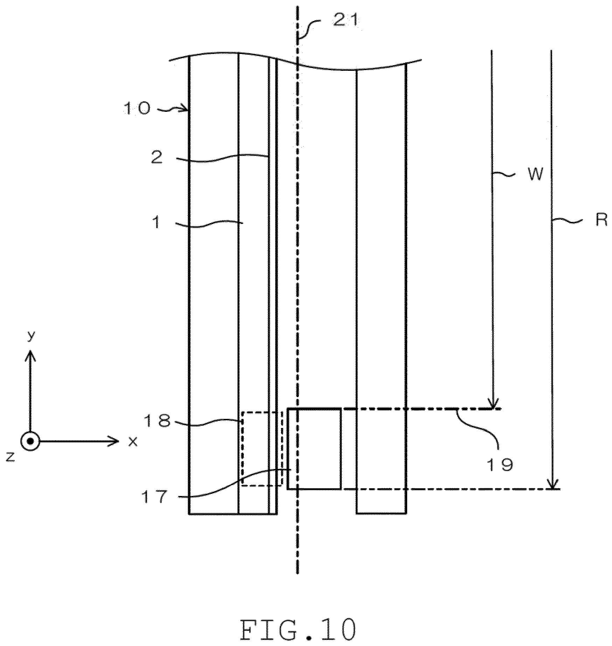

<Another embodiment Fig. 9 is a schematic sectional view showing a configuration example of an optical line sensor unit according to another embodiment of the present invention. Fig. 10 is a partial plan view of the optical line sensor unit which indicates the attachment position of the reference reflector plate 17 in the optical line sensor unit in Fig. 9. In Fig. 10, the housing 16 is not shown.

Instead of providing the two line light sources 10 on both sides with respect to the lens array 11 in the sub-scanning direction x as in the above embodiment, only one line light source 10 is provided on one side with respect to the lens array 11 in the sub-scanning direction x in the present embodiment. Therefore, in the present embodiment, the light passing region 18 that allows the light from the line light source 10 to pass through and leads to the approximate focal point 21 is also formed only on one side with respect to the lens array 11 in the sub-scanning direction x. In the present embodiment, only the number of line light sources 10 and the shape and arrangement of the reference reflector plate 17 are different from the above embodiment, and the other configurations are the same as in the above embodiment. The same reference numerals are given and detailed description thereof will not be repeated.

In the present embodiment, on one side with respect to the reference reflector plate 17 in the sub-scanning direction x, the light directed from the line light source 10 toward the transport path 20 is not completely blocked, but the light can pass through the transport path 20 through the light passing regions 18. The light from the line light sources 10 that has passed through the light passing regions 18 is guided to the position of the approximate focal point 21 of the lens array 11 on the transport path 20. This prevents the light directed from the line light sources 10 toward the focal point 21 from being blocked by the reference reflector plate 17 at an end of the light receiving region R of the light receiver 12 in the main scanning direction y. It is therefore possible to prevent the amount of light received in the reading region W of the light receiver 12 from decreasing at the end in the main scanning direction y.

As shown in Fig. 9, the end of the reference reflector plate 17 close to the reading region W (an end of the boundary position 19) is located close to the lens array 11 with respect to the straight line 23 connecting the focal point 21 of the lens array 11 at a position facing the end and an end point 22 close to the lens array 11 of the light emitting side surface 1d (emission surface) of the line light source 10 at a position facing the end. In this way, the end of the reference reflector plate 17 close to reading region W does not block the light directed from the line light sources 10 toward the focal point 21. This can effectively prevent a reduction in the amount of light received in the reading region W of the light receiver 12 at the end in the main scanning direction y.

In the present embodiment, the line light source 10 is not provided on the other side of the sub-scanning direction x with respect to the reference reflector plate 17, the light passing region 18 is unnecessary on the other side. Therefore, the shape of the reference reflector plate 17 on the other side is arbitrary.

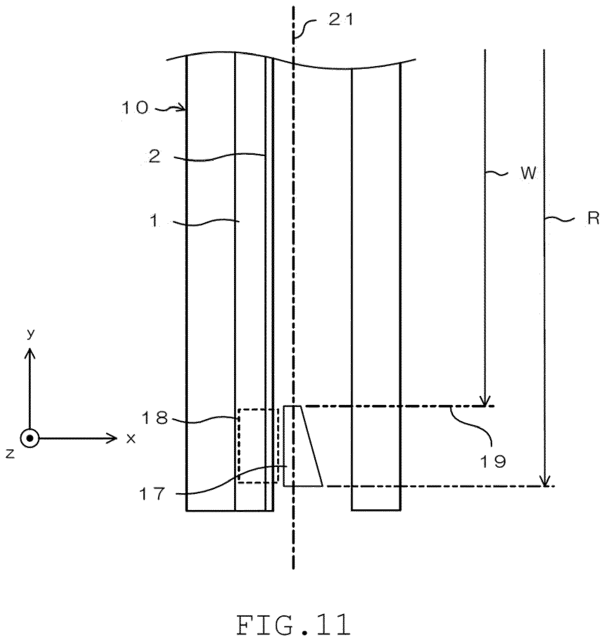

Fig. 11 is a partial plan view of the optical line sensor unit which shows a modification of the shape of the reference reflector plate 17 in Fig. 10. In this example, the shape of the reference reflector plate 17 is formed in a trapezoidal shape. As described above, the light passing region 18 does not need to be formed symmetrically on both sides with respect to the reference reflector plate 17 in the sub-scanning direction x, and the reference reflector plate 17 may have an asymmetrical shape with respect to the focal point 21. However, the shape of the reference reflector plate 17 is not limited to a rectangular shape or a trapezoidal shape, and may be another shape.

### DESCRIPTION OF REFERENCE NUMERALS

- 1: Light guide
- 2: Cover member
- 3: Light source unit
- 4: Light source unit
- 10: Line light source
- 11: Lens array
- 12: Light receiver
- 14: Protective glass
- 16: Housing
- 17: Reference reflector plate
- 18: Light passing region
- 19: Boundary position
- 20: Transport path
- 21: Focal point
- 22, 22': End point
- 23: Straight line

## Claims

1. An optical line sensor unit configured to scan a paper sheet transported on a transport path along a sub-scanning direction along a main scanning direction orthogonal to the sub-scanning direction, the optical line sensor unit comprising:
a line light source used as an illumination light source configured to illuminate the paper sheet;
a lens array configured to guide light from the illuminated paper sheet;
a light receiver having a plurality of light-receiving elements aligned along the main scanning direction and configured to receive light that has passed through the lens array by the plurality of light-receiving elements; and
a reflecting member disposed on an optical path from the line light source to the lens array, provided in a light receiving region of the light receiver, outside a reading region for reading an image of the paper sheet in the main scanning direction, and configured to reflect a part of light from the line light source and guide the light to the lens array,
wherein the reflecting member has a light passing region disposed on at least one side of the sub-scanning direction, configured to allow the light from the line light source to pass through, and configured to lead the light to an approximate focal point of the lens array on the transport path.

2. The optical line sensor unit according to claim 1, wherein the plurality of light-receiving elements near an end of the reading region has a light receiving intensity substantially identical in a case where the reflecting member exists and in a case where the reflecting member does not exist.

3. The optical line sensor unit according to claim 1 or 2, wherein when a total light receiving intensity of the plurality of light-receiving elements provided in a region outside a boundary position in the main scanning direction is Sₚ in a case where the reflecting member exists and Sₙ in a case where the reflecting member does not exist, Sₚ/Sₙ > 2.

4. The optical line sensor unit according to any one of claims 1 to 3, wherein the light passing region has a width that is substantially uniform along the main scanning direction or is larger toward the reading region along the main scanning direction.

5. The optical line sensor unit according to any one of claims 1 to 4, wherein the reflecting member has an end close to the reading region in the sub-scanning direction, the end being located close to the lens array with respect to a straight line connecting a focal point of the lens array at a position facing the end and an end point close to the lens array of an emission surface of the line light source at a position facing the end.

6. The optical line sensor unit according to any one of claims 1 to 5, wherein
the two line light sources are provided on both sides with respect to the lens array in the sub-scanning direction, and
the light passing regions are disposed on both sides with respect to the lens array in the sub-scanning direction.

7. The optical line sensor unit according to any one of claims 1 to 5, wherein
the line light source is provided alone on one side with respect to the lens array in the sub-scanning direction, and
the light passing region is disposed on one side with respect to the lens array in the sub-scanning direction.

8. The optical line sensor unit according to any one of claims 1 to 7, wherein
the reflecting member has a multilayer structure including at least two layers, the at least two layers including
a layer of the reflecting member close to the line light source, the layer being configured to reflect ultraviolet light, and
a layer of the reflecting member close to the transport path, the layer being configured to reflect visible light and infrared light.

9. The optical line sensor unit according to any one of claims 1 to 8, wherein the reflecting member includes a material including at least one of metal oxide, silicon dioxide, or fluororesin.

10. The optical line sensor unit according to any one of claims 1 to 9, wherein the reflecting member has a thickness of 0.3 mm or less.
